Europäisches Patentamt

European Patent Office

Office européen des brevets

(19)

(11) Publication number: **0 240 576**

A1

# EUROPEAN PATENT APPLICATION

(21) Application number: **86103956.8**

(22) Date of filing: **22.03.86**

(51) Int. Cl.³: **F 16 K 31/06**

(30) Priority: **05.04.85 CN 85102444**

(43) Date of publication of application:
**14.10.87 Bulletin 87/42**

(84) Designated Contracting States:
**DE FR GB**

(71) Applicant: **WU HAN ENGINEERING INSTITUTE**
**Mafangshan Wuchang**
**Wuhan(CN)**

(72) Inventor: **Chen, Chengshu**
**Mafangshan Wuchang**
**Wuhan(CN)**

(74) Representative: **Goddar, Heinz J., Dr. et al,**
**FORRESTER & BOEHMERT Widenmayerstrasse 4/l**
**D-8000 München 22(DE)**

(54) **Electro-hydraulic integrated block.**

(57) An electro-hydraulic proportional valve (4) wherein a magnetic core (9) passing through a non-control winding (11) and a core (14) of sliding valve being placed in the one end of magnetic core is characterised in that control winding (10) is placed between said non-control winding (11) valve and core, and a spring film (12) with its circumference fixed is placed between said core and said valve, and the centre portion of said spring film (12) is fixedly coupled with valve core (14), and a cylindrical valve bush (13) is placed between the said valve core (7), and valve body, and said cylinderical valve bush is provided with inlet and outlet ports.

Fig. 3

EP 0 240 576 A1

## Electro-hydraulic integrated block

The present invention relates to the hydraulic control valves

At present , the elements for converting the electric signal  into hydraulic signal comprise   electro-hydraulic servo valve and electro-hydraulic proportional valve, because of the higher price of the electro-hydraulic servo valve, it is limited to be used in common.

The electro-hydraulic proportional valve has come     to meet the needs of reduction of the cost of the electro-hydraulic conversion elements, which is constituted by installing a proportional electromagnet in the common pressure valve, flow valve and directional valve, instead of original control portion ( manual or electromagnetic ). The control accuracy of which electro-hydraulic proportional valve is lower than that of electro-hydraulic servo valve, but its price is still higher.

The present conception of designing hydraulic control elements is mainly that connecting the sliding valve with the hydraulic resistor in the different form of circuits   form various valves, such as releave valve, speed adjusting valve , pressure adjusting valve, pressure reducing valve..., and so on, in this way, not more than ten kinds of valves can be formed,farther,by using those valve as a fundamental control element, a varieaty of hydraulic control circuits can be constituted for controll -ing the hydraulic systems. Thus the users have to form the hydraulic systems according to the functions definded by those valves. because of this, the development of the hydraulic technique is restrained.

Recently, the plug in- assembled hydraulic valves , such as release valve, speed adjusting valve, pressure reducing valve and so on, which are formed by plug in- assembled step valves, are constituted on the base of traditional hydraulic valve by plug in-assembled stop valve instead

1

of the sliding valve, to standardize the valve core. As viewed from use, there is no more difference between the plug in- assembled hydraulic valves and the traditional hydraulic valves, that is, the plug in-assem -bled hydraulic valve has the same disadvantage as that of traditional valve.

The first object of the present invention is intended to use the fundamental control elements with universal functions, such as hydrau -licy control two-port valve, electro-hydraulic proportional valve and hydraulic resistor to form various hydraulic circuits which can be constituted by traditional hydraulic valvetype-elements.

The second object of present invention is intended to replace the higher cost and inapplicable traditional electro-hydraulic proportional valve by cheaper electro-hydraulic converssion elements; to make the popular use of electric control hydraulic system possible, and to provide a favourable condition for using micro-computer control hydraulic system.

The third object of present invention is intended to replace existent various hydraulic control valve by hydraulic control two-port and cheaper electro-hydraulic proportional valve, making the product unitary for commercial production, and making the cost of hydraulic circuits reduced greatly.

The present invention overcomes the above disadvantages of existent hydraulic technigue hydraulic control two-port valve and eletro-hydrau -lic porportional valve according to present invention, are sealed in an integrated block, on the one end of the integrated block, there are all inlets and outlets of hydraulic control two-port valve and electro hydraulic proportional valve, besides, there are four channels, i. e,

2

inlet channel, main back channel, sub-back channel and oil leaking channel, passing through the integrated block. The connecting oil circuits among oil outlets and between oil outlets and oil channels are compactly made on the integrated circuit board seperated from electro-hydraulic integrated block . Various electro-hydraulic circuits are formed by closely superpo -s ing one or several electro-hydraulic integrated block with one or several integrated circuit board by connector. As long as a controlling signal is applied to the controlling winding, it can control the hydraulic circuit to act.

The electro-hydraulic proportional valve according to present inven -tion is formed as follows: a magnetic core passes through the centre of non-control winding,  the core of sliding valve is placed  in the one end of the magnetic core; a control winding is placed between non-control winding and magnetic core; a fixed spring film is placed between magnetic core and valve core, the centre portion of the spring film is fixedly coupled with valve core; a ring valve bush is placed between valve core and valve body and the oil inlets and outlets are formed in the valve bush, when a control signal is applied to the control winding; the valve core will be move up and down, to vary the area of the oil  port.

The hydraulic control two-port valve according to present invention, is formed as follows; a flat cylinder with ring slot in its middle port is installed in a cup bush, each of two sealed cavities formed by the space between two ends of the flat cylinder  and cup bush is respectively inst -alled a spring,so that the ring slot in the middle of flat cylinder just not overlap the four rectantular oil ports uniformlly distributed in the same section of cup bush cylindrical wall, and rectangular oil ports are just closed, each of two face to face rectangular ports are respec
-tively interlinked via the slots of outer surface of cup bush, forming
the inlet and outlet of the hydraulic control two-port valve.

From above descroption, we may learnt that the present invention
has following advantages:

(1) because the hydraulic control two-port valve and the electro-
hydraulic proportional valve are the elements which have universal
functions, and take the form of integrated block, which maxes it extream
-ly easy to interconnect among the hydrauli controlle two-port valve,
electro-hydraulic proportional valve and hydraulic resistor, so, the
present inrention provides extream flexibiity and easy operation to
user. By using the integrated block, hydraulic resistor and circuit
beard, consumer can easily perform all the circuits that traditional
hydraulic valves may form. thus , the present invention avoids the dis
-advantage of single function, and limited use, and promots the develop
-ment of the hydraulic technique.

(2) The electro-hydraulic proportional valve in the electro-hy
-draulic integrated block is an electro-hydraulic converting element
which converts the weak electric signal into electro-hydraulic signal.
In addition, because electro-hydraulic two-port valve is an universal
element, so, it can produce in a larg batch process technology (special
automatic product line), moreover, because of extreamly easy intercon
-nection of circuits as mentioned above, the cost of the electro-hyd
-raulic circuit formed by electro-hydraulic integrated block is likely
to be reduced greatly.

4

( 3 ) because of the lower cost of the electro-hydraulic integrated block, it is possible for the electro-hydraulic circuits to popularly be used, and this also provides the extreamly favourable condition for populari -zing the micro computer control-hydraulic system.

Fig. 1  is the perspective view of electro-hydraulic integrated block of the present invention.

Fig. 2  is the perspective view of oil channels of the electro-hydraulic integrated block.

Fig. 3  is the sectional view of electro-hydraulic proportional valve.

Fig. 4  is the sectional view of hydraulic control two-port valve.

Fig. 5  is cut-away view of cup bush.

Fig. 6  is side view of cup bush.

Fig. 7  is the sign presenting hydraulic control two-port valve.

Fig. 8  is the sign presenting electro-hydraulic proportional valve.

Fig. 9  is the circuit of one embodiment of the present invention.

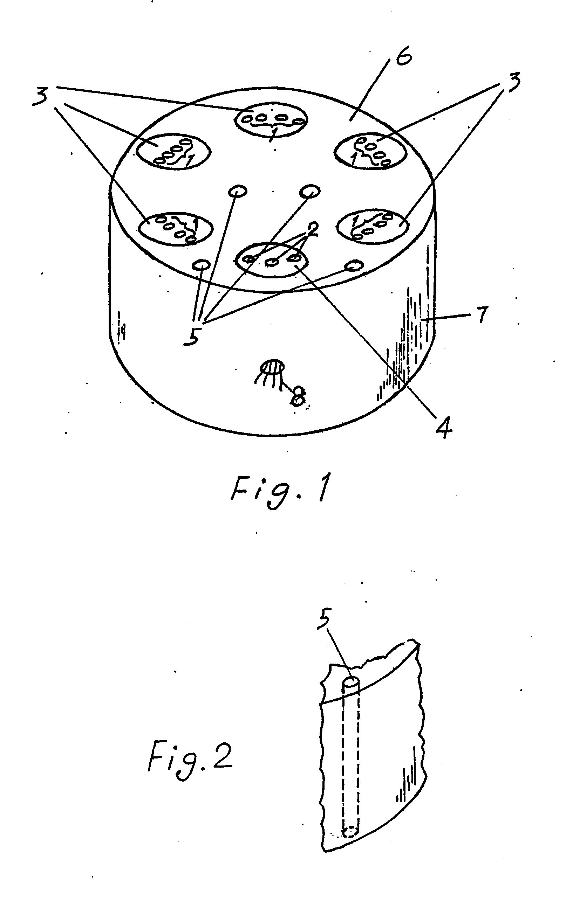

According to present invention, by use of hydraulical control two-valve, electro proportional valve and hydraulic resistor, all kinds of hydraulic circuits can be formed. hydraulic control two-port valve (3) and electro-hydraulic proportional valve (4) are sealed in an integrated block (7), ( refer to Fig. 1 ) , on the one end of the integrated block, there are all outlets 1 and 2 of hydraulic control two-port valve and electro hydraulic proportional valve, besides, there are four oil channels, i.e, inlet channel, main back channel, sub-back channel and oil leaking channel, passing through the integrated block. The connecting oil circuits among oil outlets and between oil outlets and oil channels are compactly made on the integrated circuit board seperated from electro-hydraulic integrated block or blocks. various electro-hydraulic circuits are formed by closely surperposeing one or several electro-hydraulicintegrated block with one or several integrated circuit board by connector. The electro-hydraulic proportional valve converts the weak electric control signal into low power-hydraulic pressure signal to control hydraulic control two-port valve. The hydraulic control two-port valve then amplifies the low power-hydraulic signal into high power-hydraulic signal to drive the hydraulic actuator. (8) is the leads of winding of elector-hydraulic proportional valve.

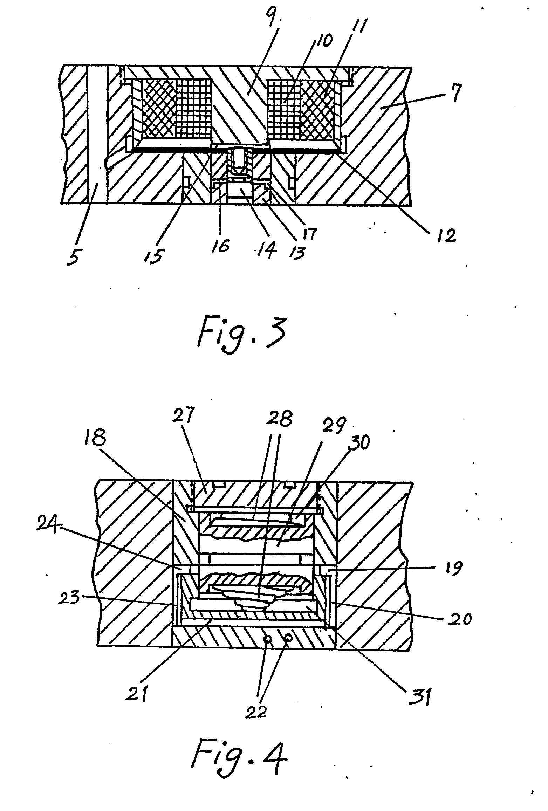

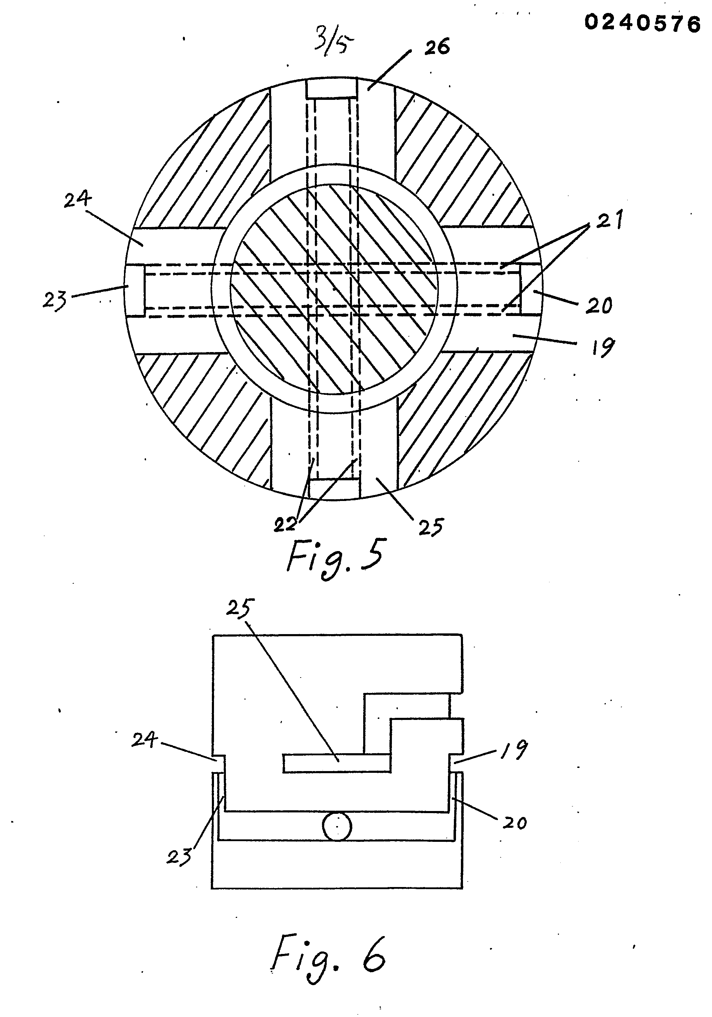

The electro-hydraulic proportional valve (refer to Fig. 3 ) accord-ing to present invention, is constituted as follows: the valve core(14) of a sliding valve is fixedly coupled to the centre of one side of a spring film(12) which is made from magnetic conduct material with its circumference fixed, and the valve core is installed in a valve bush(13) with oilport (16) , and can be movable axially to vary the flow area

6

of oil port. Oil ports (16) of valve bush (13 ) are uniformlly distri -buted in the same section of four rectangular oil ports., the outersur -face of valve bush is provided with slots (17), so as to connect the two face to face rectangular oil ports, forming inlets and outlet. The said sliding valve may use the existent sliding valve, and an electromagnetic core with a controlling winding (10) and a non-controlling winding (11) is installed on the other side of the spring film wherein the non-controlling winding may replaced by a flat permanent magnet ring (9) is the magnetic core, on the bottom of the electro-control two port valve, there are three oil ports, tow of which are interlinked with inlet and outlet of the sliding valve, another is the leaking port of end of the valve core. (7) is integrated block after pressing the sliding valve bush into integrated block,this three oil ports become the outlets (2) in the end of the integrated block. (5) of Fig 3 is the oil leaking channel, Once the winding (11) is powered, the valve core is attracted to move up and thus  close the oil port of the sliding valve, In this case, if a control signal is applied to the winding (10), the valve core will move up and down, varying the area of the oil port, Fig. 3 also shows the serew 15/ for connecting the spring film and valve core.

The hydraulic control two-port valve of present invention ( refer to Fig. 4) is constituted as follows: a flat cylinder with ring slot in its middle portion (29) is installed in a cup bush (18) and two springs (28) are installed in the two sealed cavities (30) (31) formed by the space between the two ends of the flat  cylinder and cup bush, so that the ring slot in the middle of the flat cylinder just does not overlap the four rectangular oil ports (14), (24), (25) and(26) uninformlly

7

distributed in same section of cup bush cylindrical wall, and rectangu -lar oil ports are just closed, when the differntial pressure exists between sealed cavities, the flat cylinder will move to vary the area of four oil ports (19), (24), (25), and (20). Two face to face rectangular portS(19), (24) are interlinkied via the slots(20), (23) of outersurface of cup bush and the holes(21) of bottom of cup bush( as shown in Fig. 5) or via the slots(20), (23) of outer surface of cup bush and the slots in the outersurface of cylinder of cup bush as shown in Fig. 6, forming the inlet, two face to face rectangular oil port (25), (26) are interlinked via front and back slots of outersurface of cylinder of cup bush and the holes (22) of bottom of cup bush ( as shown in Fig 5), or via front and back slots of outer surface of cylinder of cup bush and the slot of outer surface of cylinder of cup bush (as shown in Fig. 6) , forming the outlet (shown in Fig. 5). In the cylinder wall far away from the bottom of the cup bush and in the bottom of cup bush, there aretwo oil ports, which are respectively interlinked with the two sealed cavities, forming two control ports of hydraulic contrbl two-port valve. In the bottom of the cup bush, there are four oil ports, which are interlinked with inlet, outlet, and two control oil ports, respectively, with the cup bush pressing into integrated block, the port in the bottom of the cup bush becames the outlet of the integrated block.

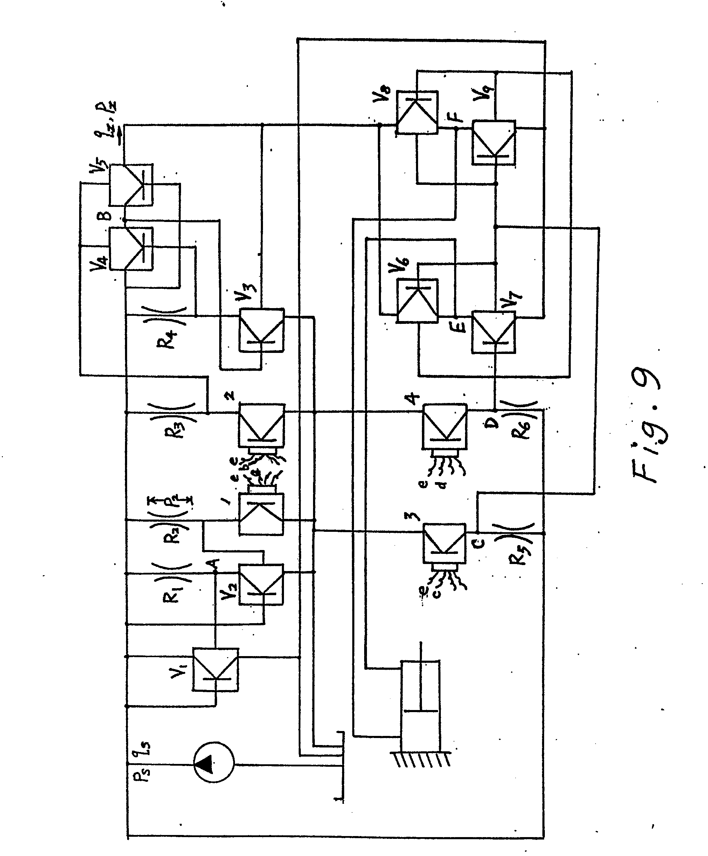

An embodiment of electro-hydraulic integrated block of present invention shows in Fig. 9.

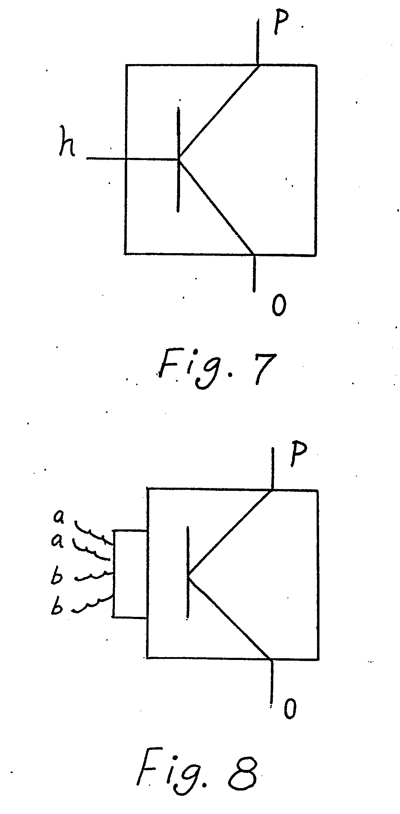

The signs v1 v2..., v9 in Fig 9 represent the hydraulic two-port valve as shown in Fig. 7(a), wherein p and o represent the two terminals of oil p orts, h and e represent the oil port of control terminal, when the pressure on terminal h is higher than that of terminal e, the oil port is opened, and the opened area of the port proportions to the differential pressure between terminal h and e, for an example, when the pressure on the terminal h is smaller than that of terminal e, or equall, the oil port will be closed.

The sign of the electro-hydraulic proportional valve shows in Fig. 8, wherein p and o represent the two terminal of oil port of the sliding valve, aa is the two leads of the control winding, bb is the two leads of the non-control winding, when the terminal bb is powered, the oil port of sliding valve of the electro-hydraulic proportional valve is then closed, in this case, when the reverse current flows through the terminal aa, the sliding valve port will be opened, and the area of the opened port proportions to the valve of the current through the terminal aa.

The circuit shown in Fig 9 may be divided into four portions: rationing pump, pressure adjusting circuit, speed adjusting circuit and reversing circuit bridge.

The pressure adjusting circuit is composed of hydraulic control two-port valve v1, v2 and hydraulic resistor R1,R2 and electro-hydrau -lic proportional valve 1. The hydraulic controlled two-port valve v2 and together with hydraulic resistor R1 constitutes a pressure ampli

9

-fier, hydraulic control two-port valve V1 constitutes a spilling shunt, the terminal e of which v1 is connected to the output of point(a) of the pressure amplifier, and the terminal h is connected to the output of the oil pump, the pressure Ps of the oil pump output is divided by the hydraulic resistor R2 and the resistor formed by electro-hydraulic proportional oil passing port, and the differential pressure on the hydraulic resistor R2 is sent to p input of hydraulic control valve v2, when ps rising, the differential pressure p2 on the hydraulic resis -tor increases, p2 is amplified by pressure amplifier and then sent to the control terminal of hydraulic controlled two pass valve v, thus, oil port of v1 becomes larger, and the flow of spilling shant increases, and ps then decreases to maintain ps constant. As long as adjusting the current of the controlling winding of electro-hydraulic proportional valve 1 , the ps valve can be changed. Thus the adjusting circuit formed by v1, v2 R1 R2 and electro-hydraulic proportional valve 1 can either adjust the pressure ps valve, or automatically maintain the adjusted pressure constant. It performs same function as that of existent electro -hydraulic proportional pressure valve, but has better sensitivity, because it has a stage of amplifier.

The speed adjusting circuit is composed of hydraulic controlled two -pass valves v3, v4, v5, electro-hydraulic proportional valve 2 and hyd -raulic resistor R3 and R4.

Assume that the pressure and flow of output of speed adjusting circuit are Pz and qz, the differential pressure of hydraulic controlled two-port valve v5 and v4 are p5 and p4 , respectively. The hydraulic control two- port valve v3 together with hydraulic resistor R4

10

constitutes a pressure amplifier.

The variation of Pz causes the variation of flow qz through the output of speed adjusting circuit, when pressure Pz of the output of speed adjusting circuit increases, then p5 decreases, and so does qz then, p5 is sent to the control terminal of hydraulicy control two-port valve v3, after amplifying, sent to the terminal h of hydrauliclly controlled two-port valve v4, as a result, the area of oil port increases, p4 decreases, and pB ( the pressure at point B) increases, thus, the differential pressure p5 between pB and pz remains constant, i,e $P_5=P_B-P_z$ that is, the flow qz through the output of speed adjusting circuit remains stationary, by adjusting the current through controll -ing winding of electro-hydraulic proportional valve 2, the hydraulic resistor of oil port of v5 can be adjusted , so as to vary the flow qz through the output of speed adjusting circuit, thus, the speed adjus -ting circuit which is composed of v3, v4, v5, electro-hydraulic proper -tional valve z and hydraulic resistor R3 and R4 , is able to adjust the output flow qz by electriclly controlling, and to maitain the adjus -ted flow qz stationary automatically as well, This circuit performs same function as that of existent electro-hydraulic proportional valve, but has better sensitivity.

Bridge-type reverse circuit is composed of electro hydraulic con -trol two-port v6, v7, v8, v9, electro-hydraulic proportional valve 3 and 4 , and hydraulic resistor R5 and R6. Four hydraulic controlled two-port valves form a bridge circuit, which has two uses, one uses as a reverse valve, and the other uses as a proportional reverse valve. In the case of reverse valve, when the pressure pc at point c is high, the pressure pD at point D is low, thus, hydraulic control two-port valve v6 and v9 are opened, v7 and v8 are closed, and the piston of oil cylinder moves in(left shift), otherwise, when the pressure at point c is low and point D is high, then the piston of oil hylinder move out (right shift). In the case of a proportional reverse valve, assume that the effictive area of non-rod cavity- piston is A, the effictive area of rod cavity -piston is A2, and A1/A2 = 2, farther, assume that the pressure at point E is PE , the pressure at point F is PF, then there will be following three cases:

$PE > 2PF$, when piston moves in (leftshift).

$PE = 2PF$, when piston remains stationary.

$PE < 2PF$, when piston moves out (rightshift).

pressure PE and PF depends on the differential pressure between point C and D. The pressure at point C and D can be adjusted by adjusting the current in the contralling winding of electro-hydraulic proportional valve 3 and 4, this circuit has the same functions as that of existent three-possition four- port electro-hydraulic proportional reverse valve.

The features disclosed in the foregoing description, in the following claims and/or in the accompanying drawings may, both separately and in any combination thereof, be material for realizing the invention in diverse forms thereof.

12

0240576

Claims

1. An electro-hydraulic proportional valve wherein a core passing through a non-control winding and a valve core of sliding valve being placed in the one end of core is characterised in that a control winding is placed between said non-control winding and core, and a spring film with its circumference fixed is placed between said core and said valve, andthe centre portion of said spring film is fixedly coupled with valve core, and a cylinderical valve bush is placed between the said valve core and valve body, and said cylinderical valve bush is provided with inlet and outlet ports.

2. An electro-hydraulic proportional valve as claimed in claim 1, is characterised in that said inlets and outlets are rectangular ports.

3. An electro-hydraulic proportional valve as claimed in claim 1 and claim 2, is characterized in that the said inlet and outlet are in the same section of said valve bush, and along the outer surface of valve bush, there are two oil slot to connect the two face to oil port, form -ing inlets and outlets.

4. A hydraulic control two-port valve is characterized in that a flat cylinder having ring slot is installed in a cup bush, and two springs are respectivelly installed in the two seal cavities formed by the space between the ends of said flat cylinder and cup bush, so that the ring slot in the centre of said flat cylinder just does not overlap the four rectangular oil port which is uniformly distributed in the section in same radial as that of cup bush cylinderical wall, and the rectangular oil port is just closed . Each two face-to face rectangular oil port

1

are connected each other via the slots in the outer surface of the cup bush, forming the inlets and outlets of said electro-hydraulic control two-port valve.

5. electro-hydraulic integrated block is characterized in that at least one hydraulic control two-port valve and at least one electro-hydraulic proportional valve is sealed in the said integrated block, and in the one end of integrated, block,there are all inlet and outlet of hydraulic control two-port valve and electro-hydraulic proportional valve.

0240576

Fig. 1

Fig.2

— 1 —

Fig.3

Fig.4

0240576

**Fig. 5**

**Fig. 6**

Fig. 7

Fig. 8

— 4 —

Fig. 9

**EUROPEAN SEARCH REPORT**

European Patent Office

| | DOCUMENTS CONSIDERED TO BE RELEVANT | | EP 86103956.8 |
|---|---|---|---|

| Category | Citation of document with indication, where appropriate, of relevant passages | Relevant to claim | CLASSIFICATION OF THE APPLICATION (Int. Cl.4) |
|---|---|---|---|
| A | FR - A - 2 139 170 (R. BOSCH)<br>* Fig. 1,3 *<br>-- | 4 | F 16 K 31/06 |
| A | GB - A - 1 112 144 (AUTOMATIC SWITCH COMP.)<br>* Totality *<br>-- | 1 | |
| A | US - A - 3 416 034 (CARTER et al.)<br>* Totality *<br>-- | 1 | |
| A | US - A - 3 970 111 (BRUWE et al.)<br>* Totality *<br>---- | 4 | |
| | | | **TECHNICAL FIELDS SEARCHED (Int. Cl.4)**<br><br>F 16 K 31/00 |

The present search report has been drawn up for all claims

| Place of search | Date of completion of the search | Examiner |
|---|---|---|
| VIENNA | 24-10-1986 | BAUMANN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82